(19) Europäisches Patentamt
European Patent Office
Office européen des brevets

(11) **EP 3 190 149 A1**

(12) **EUROPEAN PATENT APPLICATION**

(43) Date of publication:
**12.07.2017 Bulletin 2017/28**

(51) Int Cl.:
*C08J 9/00* (2006.01)    *C08J 9/10* (2006.01)
*C08L 23/16* (2006.01)    *C08K 3/04* (2006.01)
*C08K 3/34* (2006.01)    *C08K 5/09* (2006.01)
*C08K 5/10* (2006.01)    *C08K 5/17* (2006.01)
*C08K 5/20* (2006.01)

(21) Application number: **16306840.6**

(22) Date of filing: **29.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.01.2016 KR 20160001003**

(71) Applicant: **Nexans
75008 Paris (FR)**

(72) Inventors:
• **AHN, Dae-Up
27837 Chungcheongbuk-do (KR)**
• **JEON, Jun-Bae
27939 Chungcheongbuk-do (KR)**
• **KIM, Seong-Jin
28582 Chungcheongbuk-do (KR)**

(74) Representative: **Peguet, Wilfried
Ipsilon
Le Centralis
63, avenue du Général Leclerc
92340 Bourg-la-Reine (FR)**

(54) **MICROCELLULAR FOAMED NANOCOMPOSITE AND PREPARATION METHOD THEREOF**

(57) The present invention relates to a microcellular foaming nanocomposite comprising: an elastomeric polymer; a nanofiller; at least two of amphiphilic dispersing agents; a chemical blowing agent; an activator for chemical blowing agent; and a crosslinking agent. The present invention also relates to a preparation method of a microcellular foamed nanocomposite.

Fig.1

**Description**

**Field of the invention**

The present invention relates to a microcellular foaming nanocomposite, a microcellular foamed nanocomposite, and a preparation method thereof.

**Background of the invention**

Nanofillers having a size of several nanometers can be added and dispersed into polymer material in order to improve mechanical properties, thermal stability, barrier property or flame retardant property, etc. of the polymer matrix. Nanofillers act as an effective nucleation agent when the polymer matrix is foamed.

However, most of the inorganic nanofillers having polarity tend to form aggregates having a size of dozens of micrometers or more in a relatively low polar polymer matrix, and it decreases the effect of nanofillers significantly. Therefore, there still remains in the related art a demand for means to disperse nanofiller in the polymer matrix sufficiently, and a demand for a nanocomposite which can sufficiently acquire the effect of nanofiller in the polymer matrix.

Microcellular polymer matrix is a foamed polymer that is characterized by cells sized averaging about 100 $\mu$m or less. Some of these materials present better properties than conventional foams, relatively high impact strength, high toughness, lower thermal conductivity, and lower cost and weight than solid polymers. Due to their properties, the microcellular polymer matrix can be applied to a broad range of industry such as parts of automobile, train, ship and airplane (M.A.Rodriguez-Perez et al., "Using chemical blowing agents to make microcellular nanocomposites", Society of Plastics Engineers, 2009).

In order to prepare the microcellular polymer matrix, physical foaming method and chemical foaming method are known in the art.

The physical foaming method is a process based on dissolving a $CO_2$ or nitrogen gas in a molten polymer at high pressure. However, this method has a problem to require very high pressure, high-pressure-gas-injection apparatus, and extremely high-pressure-drop-rates, and thus is not appropriate for mass production of the polymer.

The chemical foaming method is for preparing microcellular foaming polymer matrix based on using chemical blowing agent, which is degraded under the polymer processing condition of high temperature to generate gas. This method has an advantage that, without special apparatus of high pressure, it can be carried out under the common polymer processing condition, and thus it is appropriate for mass production.

However, most of chemical blowing agents having polarity tend to form giant aggregates in a relatively non-polar polymer matrix so as to generate a large amount of gas locally, and tend to decrease the mechanical properties of molten polymer matrix which forms walls between the cells. Thereby, giant open cells under the common processing condition of polymer matrix are generated.

Therefore, there still remains in the related art demands for a microcellular polymer matrix having enhanced mechanical properties and mass producible properties.

**Prior Art**

[Patent Publication No.1] US 7026365 (2006.4.11)

**Brief description of the invention**

It is an object of the present invention to provide microcellular foaming nanocomposite which has enhanced physiological properties and is mass-producible. It is another object to provide a preparation method of the microcellular foaming nanocomposite of the present invention.

In order to achieve the object, the present invention provides a microcellular foaming nanocomposite comprising elastomeric polymer; nanofiller; at least two of amphiphilic dispersing agents; chemical blowing agent; activator for the blowing agent; and crosslinking agent. More preferably the two amphiphilic dispersing agents are different from one another.

In the present invention, the microcellular foaming nanocomposite allows advantageously to obtain a microcellular foamed nanocomposite. In an embodiment, the foamed nanocomposite has foaming cells having an average diameter of 120 $\mu$m or below, preferably 100 $\mu$m or below. Also, in another embodiment, the nanocomposite has a cell density of $10^7$ cells/cm$^3$ or more.

In a preferred embodiment, the elastomeric polymer is ethylene-propylene-dien copolymer (EPDN).

In another preferred embodiment, the nanocomposite is selected from the group consisting of carbon black, nanoclay, nanosilica, polyhedral oligomer silsesquioxane(POSS), layered double hydroxide, nano-CaCO$_3$, carbon na-

notube, griffin, colloid nanoparticle and a mixture thereof.

In one embodiment, the at least two of amphiphilic dispersing agents are selected from the group consisting of an amphiphilic carboxylic acid based compound, an amphiphilic amine based compound, and an amphiphilic fatty acid ester compound, separately.

In another embodiment, the chemical blowing agent is selected from the group consisting of p,p'-oxybis(benzenesulfonylhydrazide),(p-toluenesulfonylhydrizide(TSH),(p-toluenesulfonylsemicarbazide (TSSC), azidodicarbonamide (ADC) and a mixture thereof.

Also, in another embodiment, the activator for the blowing agent is selected from the group consisting of metallic activator, acidic activator, basic activator, urea-based activator and a mixture thereof.

In a preferred embodiment, the nanocomposite of the present invention comprises elastomeric polymer in an amount of 100 parts by weight, nanofiller in an amount of 0.1 to 20 parts by weight, amphiphilic dispersing agents in an amount of 1 to 40 parts by weight, chemical blowing agent in an amount of 1 to 20 parts by weight, activator in an amount of 0.1 to 10 parts by weight, and crosslinking agent in amount of 0.1 to 10 parts by weight, the amounts being expressed with respect to 100 parts by weight of elastomeric polymer.

In addition, the present invention also provides a method for preparing the microcellular foamed nanocomposite according to the present invention, comprising the steps of:

> a) mixing elastomeric polymer, nanofiller, at least two of amphiphilic dispersing agents, chemical blowing agent, activator for chemical blowing agent and crosslinking agent;
> b) crosslinking the mixture obtained from the step a) under the condition of high pressure; and
> c) releasing the pressure and foaming.

### Advantageous effects

The microcellular foamed nanocomposite according to the present invention can advantageously have a specific gravity of 0.6 or less, and/or an average foaming cell diameter of 0.2 $\mu$m or less (i.e. average cell size of 0.2 $\mu$m or less), and/or a cell density of $10^7$ cells/cm$^3$ or more. Thus, the foamed nanocomposite has enhanced physiological properties.

In addition, the foamed nanocomposite according to the present invention can be produced by adding nanofiller, at least two of amphiphilic dispersing agents, chemical blowing agent, and activator to the elastomeric polymer simultaneously, and mixing them, and can be produced under the condition of conventional temperature of crosslinking procedure. Therefore, the present invention has an advantage that the mass production is possible.

### Brief description of drawings

> Fig. 1 is a FE-SEM (Field Emission Scanning Electron Microscope) image of the nanocomposite according to the example 5 of present invention.
> Fig. 2 is a FE-SEM image of the nanocomposite according to the example 6 of present invention.
> Fig. 3 is a FE-SEM image of the nanocomposite according to the example 7 of present invention.
> Fig. 4 is a FE-SEM image of the nanocomposite according to the example 8 of present invention.
> Fig. 5 is a FE-SEM image of the nanocomposite according to the example 9 of present invention.
> Fig. 6 is a FE-SEM image of the nanocomposite according to the example 10 of present invention.
> Fig. 7 is a FE-SEM image of the nanocomposite according to the example 2 (a comparative example) of the present invention.
> Fig. 8 is a FE-SEM image of the nanocomposite according to the example 3 (a comparative example) of the present invention.
> Fig. 9 is a FE-SEM image of the nanocomposite according to the example 4 (a comparative example) of the present invention.

### Detailed description of the invention

Hereinafter, the invention will be described in more detail.

The present invention provides a microcellular foaming nanocomposite comprising elastomeric polymer, nanofiller, at least two of amphiphilic dispersing agents, chemical blowing agent, activator for blowing agent, and crosslinking agent.

Elastomeric polymer

The elastomeric polymer used in the present invention refers to a polymer that has a glass transition temperature (Tg) of lower than room temperature and a degree of crystallization of lower than common thermoplastic polymer such as polyethylene, polypropylene etc., thus the polymer is in the rubbery plateau region and has elasticity at a room temperature. Preferably, the nanocomposite comprises one or more elastomeric polymers selected from the group consisting of simple elastomeric polymer elastomer, random elastomeric copolymer and block elastomeric copolymer elastomer, as follows:

(1) Simple elastomeric polymer
In one embodiment, the simple elastomeric polymer is natural rubber, polybutadiene, epichlorohydrin polymer, polychloroprene, or silicone rubber.
(2) Random elastomeric copolymer
In one embodiment, the random elastomeric copolymer is nitrile rubber; styrene-butadiene rubber; epichlorohydrin-ethylene oxide copolymer; ethylene-vinyl acetate copolymer; ethylene-polyethylene copolymer; ethylene-propylene diene copolymer; chlorinated polyethylene copolymer; chlorosulfonated polyethylene copolymer; polyurethane rubber; fluorocarbon rubber polymerized from chemically or structurally different two or more types of fluorocarbon monomers, such as vinylidene fluoride, chlorotrifluoroethylene, hexafluoropropylene, tetrafluoroethylene and perfluoro(methylvinyleter); Fluorocarbon rubber polymerized from chemically or structurally different two or more types of fluorocarbon monomers and one or more non-fluoro-based-monomers such as propylene; Butyl rubber polymerized from isobutylene monomers and a small amount of monomers having cross-linkable functional groups such as isoprene; or polyacrylic rubber polymerized from one or more acrylic ester based monomers and small amount of monomers having cross-linkable functional groups.
(3) Block elastomeric copolymer
In one embodiment, the block elastomeric copolymer is poly(styrene-b-isoprene) diblock copolymer, poly(styrene-b-butadiene) diblock copolymer, poly(styrene-b-isoprene-b-styrene) triblock copolymer, poly(styrene-b-butadiene-b-styrene) (SBS) triblock copolymer, poly(styrene-b-ethylene/butylene-b-styrene) triblock copolymer, or poly(styrene-b-ethylene/propylene-b-styrene) triblock copolymer.

In one preferred embodiment, the elastomeric polymer is ethylene-propylene-dien copolymer (EPDM).

Nanofiller

The nanofiller in the present invention refers more particularly to a nanoparticle in which the length of any one axis of primary particle is nanoscale, preferably less than 100 nm. In one preferred embodiment, the nanofiller is carbon black, nanoclay, nanosilica, POSS (Polyhedral Oligomeric Silsesquioxane), layered double hydroxide, nano-$CaCO_3$, carbon nanotube, griffin, colloidal nanoparticle or a mixture thereof.
In one preferred embodiment, the content of nanofiller is from 0.1 to 20 parts by weight, preferably 0.5 to 10 parts by weight, with respect to 100 parts by weight of the elastomeric polymer.
The nanofiller in the present invention can act as a nucleation agent which can initiate a foaming process. Also, the nanofiller can regulate the growth of foaming cells in the microcellular foamed nanocomposite.

Amphiphilic dispersing agent

The microcellular nanocomposite according to the present invention comprises at least two of amphiphilic dispersing agents. The amphiphilic dispersing agent used herein refers to a dispersing agent that has both a hydrophobic group and hydrophilic group in one molecule.
In a preferred embodiment, the at least two of amphiphilic dispersing agents are selected separately among amphiphilic fatty acids or amphiphilic fatty acid derivatives, and preferably, among amphiphilic fatty acids or amphiphilic fatty acid derivatives that comprise five or more, preferably ten or more of fatty carbons.
More preferably, the at least two of amphiphilic dispersing agents are selected from the group consisting of amphiphilic carboxylic acid based compound, amphiphilic amine based compound, and amphiphilic fatty acid ester compound separately.
In another preferable embodiment, one of the two amphiphilic dispersing agents is amphiphilic carboxylic acid based compound or amphiphilic amine based compound, and the other one is amphiphilic fatty acid ester compound.
In one embodiment, the amphiphilic carboxylic acid based compound is carboxylic acid metal salt, and preferably, is selected from the group consisting of zinc stearate (ZS), zinc acetate (ZA), magnesium stearate, and calcium stearate.

In another embodiment, the amphiphilic amine-based compound is selected from fatty acid amine or amide such as stearyl amine(SAmine), stearamide (SAmide), ethylene-bis-stearamide, erucamide, oleamide, behenamide; diamine or amide such as 1,12-diaminododecane(DAD), adipamide; amine or amide metal salt; and a mixture thereof.

In another embodiment, the amphiphilic fatty acid ester compound is selected from extracted oil from animal or plant, such as castor oil(CSO), coconut oil (CCO), Olive oil (OLO), Palm oil (PO)or Soybean oil (SBO); ester compound having four or more fatty carbons, such as dioctyl sebacate, dibutyl sebacate, dioctyl adipate, dioctyl phthalate, di-n-hexyl phthalate, diamyl phthalate, adipic acid polyester; and a mixture thereof.

In one preferred embodiment, the microcellular foaming nanocomposite of the present invention comprises at least two of amphiphilic dispersing agents in an amount of 1 to 40 parts by weight, preferably 10 to 30 parts by weight, with respect of 100 parts by weight of elastomeric polymer.

More particularly, the microcellular foaming nanocomposite comprises:

- one of the two amphiphilic dispersing agents in an amount of 1 to 20 parts by weight, preferably 5 to 15 parts by weight, with respect of 100 parts by weight of elastomeric polymer, and
- the other one is in an amount of 1 to 20 parts by weight, preferably 5 to 15 parts by weight, with respect of 100 parts by weight of elastomeric polymer.

The nanocomposite according to the present invention comprises at least two kinds of amphiphilic dispersing agents, which can help nanofiller be dispersed into elastomeric polymer uniformly so that the nanofiller can act as a nucleation agent and a regulating agent of cell growth effectively. In addition, with the activator for chemical blowing agent, the amphiphilic dispersing agents can decrease decomposition temperature of chemical blowing agent below cross-linkable temperature.

Chemical blowing agent

Chemical blowing agent in the present invention refers to a substance that can form cellular structure of polymer by chemical blowing process.

Preferably, the chemical blowing agent is selected from p,p' -oxybis(benzenesulfonylhydrazide)(OBSH) (e.g. commercialized by Dongjin Semichem Co. Ltd., with a reference of Unicell OHW2, decomposition temperature (DT) = 157 ~ 163°C), p-toluenesulfonylhydrizide (TSH, e.g. commercialized Dongjin Semichem Co. Ltd., with a reference of Unicell H, DT = 143 147°C), p-toluenesulfonylsemicarbazide (TSSC, e.g. commercialized by Dongjin Semichem Co. Ltd., with a reference of Unicell TS, DT = 228 ~ 232°C), azidodicarbonamide (ADC, e.g., commercialized by Dongjin Semichem Co. Ltd., with a reference of Unicell D200, DT = 202 ~ 208°C) and a mixture thereof.

In another embodiment, the content of chemical blowing agent is 1 to 20 parts by weight, preferably 2 to 10 parts by weight, with respect to the 100 parts by weight of the elastomeric polymer.

Activator for chemical blowing agent

The microcellular nanocomposite of the present invention comprises an activator for chemical blowing agent. In one embodiment, the activator is metallic activator, acidic activator, basic activator, urea-based activator or a mixture thereof.

In one preferred embodiment, the metallic activator is cadmium, zinc, barium, calcium, strontium, magnesium, lead, tin or oxide thereof such as zinc oxide.

In another preferred embodiment, the acidic activator is oxalic acid, p-toluene sulfonic acid, glycollic acid, lactic acid, acetic acid, citric acid, succinic acid, salicylic acid, stearic acid (SAcid), sulfamic acid, loralkyl phosphoric acid, phosphoric acid or malic acid.

Also, in one preferred embodiment, urea-based activator is guanidine carbonate, borax or ethanolamine. In another preferred embodiment, the urea-based activator is commercially available urea (e.g. commercialized by Dongjin Semichem Co. Ltd., with a reference of Unipaste PII).

With amphiphilic dispersing agents, the activator for the blowing agent of the present invention can decrease decomposition temperature and increase decomposition rate of the chemical blowing agent of the present invention.

In one preferred embodiment, the content of activator is 0.1 to 10 parts by weight, preferably 2 to 10 parts by weight, more preferably, 2 to 5 parts by weight, with respect to 100 parts of elastomeric polymer.

Crosslinking agent

The microcellular nanocomposite of the present invention comprises crosslinking agent. The crosslinking agent can help the elastomeric polymer be crosslinked chemically, and may include for example, sulfur, peroxide or metal oxide based crosslinking agents. In one preferred embodiment, the crosslinking agent is peroxide based crosslinking agent, and more preferably is bis(t-butylperoxyisopropyl) benzene (PBP-98).

In another embodiment, the content of crosslinking agent is 0.1 to 10 parts by weight, preferably 1 to 3 parts by weight, with respect to 100 parts by weight of elastomeric polymer.

Other additives

In one embodiment, the microcellular nanocomposite of the present invention may further comprise organic additives and/or inorganic additives. The organic additives may include, but are not limited to, antioxidants, compatibilizers, stabilizers, plasticizers, softeners, extenders, pigments, coupling agents, flame retardants or crosslinking aid agents. The inorganic additives may include, but are not limited to, metal-based inorganic additives and ceramic-based inorganic additives, such as carbon black, calcium carbonate ($CaCO_3$), talc, china clay, graphite, silica, mica, antimony trioxide, lead oxide, aluminum hydroxide, magnesium hydroxide, magnesium oxide, zinc oxide.

Preferably, the content of organic additives and/or inorganic additives is 50 parts by weight or less, more preferably 20 parts by weight or less with respect to the 100 parts by weight of elastomeric polymer.

The nanocomposite of the present invention can have an average cell size preferably of 120 $\mu$m or less, more preferably of 100 $\mu$m or less, even more preferably, of 50 $\mu$m or less. In addition, the nanocomposite of the present invention can have a cell density of $10^7$cells/cm$^3$ or more, preferably of $10^8$cells/cm$^3$ or more. The specific gravity can be of 0.6 or less, preferably of 0.5 or less.

In one embodiment, the present invention provides nanocomposite in which at least two kinds of amphiphilic dispersing agents, nanofiller, chemical blowing agent and activator for blowing agent is dispersed into elastomeric polymer. The nanofiller can aggregate with chemical blowing agent and dispersed into the polymer to act as a nucleating agent that uniformly initiates foaming process to obtain the microcellular foamed nanocomposite of the present invention and to regulate the growth rate of foaming cells by improving mechanical properties of elastomeric polymer.

In addition, at least two kinds of amphiphilic dispersing agents can improve the dispersibility of the nanofiller-chemical blowing agent aggregates into elastomeric polymer in nanocomposite of the present invention remarkably. Furthermore, at least two kinds of amphiphilic dispersing agents, together with the activator, can decrease decomposition temperature of chemical blowing agent lower than the temperature of processing polymer, so that the nanocomposite of the present invention can be produced by common chemical blowing procedure. Therefore, the present invention may provide nanocomposite which can be produced by a common chemical blowing process.

Method for preparing a microcellular foamed nanocomposite

The microcellular foamed nanocomposite according to the present invention can be prepared by a method comprising the steps of:

a) mixing elastomeric polymer, nanofiller, at least two of amphiphilic dispersing agents, chemical blowing agent, activator for the blowing agent, and crosslinking agent;
b) crosslinking the mixture obtained from the step a) under the condition of high pressure and high temperature; and
c) Releasing the pressure and foaming.

In one embodiment, the step a) may be performed by mixing elastomeric polymer, at least two of amphiphilic dispersing agents, chemical blowing agent and activator for blowing agent; adding crosslinking agent to the mixture; and mixing again. In addition, the organic additives and/or inorganic additives aforementioned may be further added to the mixture of step a) depending on the particular properties industrially required to the nanocomposite.

In particular, the mixing may be performed under the temperature lower than decomposition temperature of blowing agent and crosslinking agent, preferably lower than 100°C. The mixing may also be performed under the temperature higher than glass transition temperature or melting temperature of elastomeric polymer.

In one embodiment, the mixing in the method of the present invention may be performed through melting mixing process using mixer, for example internal mixer or open mixer. The internal mixer may include, but not limited to, Banbury mixer, kneader mixer or extruder, and the open mixer may include roll-mill mixer.

In another embodiment, the crosslinking may include crosslinking the mixture obtained from the step a) by compressing the mixture in mold.

In particular embodiment, the preparation process of nanocomposite according to the present invention may be performed through common chemical blowing procedure, which enables the nanocomposite according to the present invention to be mass producible.

The microcellular foamed nanocomposite may be advantageously applied to the cable domain.

In this respect, another object of the present invention can be a cable comprising at least one elongated conductive element surrounded by at least one microcellular foamed nanocomposite according to the invention.

The cable is preferably an electrical cable including at least one elongated electrically conductive element, made for example from a metal or a metal alloy, such as copper, copper alloy, aluminum and/or aluminum alloy.

The microcellular foamed nanocomposite can be used as at least one element selected among a layer, a jacket and a bedding, said element surrounding the elongated conductive element.

The microcellular foamed nanocomposite used in the cable can be more particularly an insulation element, such as an insulation layer.

The cable can be a cable used in various domains such as for cars, trains, ships or flights.

Floating cable can also be considered in the present invention. Floating cable has the capability to float in the water, very suitable for powering and controlling robotic cleaning systems in swimming pool and aquarium facilities as well as marine applications and submersible environmental pumping systems. Said floating cable is flexible, UV-stable and abrasion-resistant and may be fitted with choice of jackets to achieve resistance to various chemicals including acids, salt water, oil and gasoline. The microcellular foaming technology will be very effective to enhance the buoyancy and performance of a floating cable.

Hereinafter, the present invention is described in further detail in the following attached figures and Examples which are not in any way intended to limit the scope of the invention as claimed. In addition, it will appear to a person skilled in the art that various modifications may be made to the disclosed embodiments, and that such modifications are intended to be within the scope of the present invention.

## Examples

### Preparation of microcellular foamed nanocomposite (Representative example)

As a representative example of the process for preparing a microcellular foamed nanocomposite, a nanocomposite is prepared using the components and the mixing ratio as shown in Table 1.

[Table 1]

| | Components of the microcellular foaming nanocomposite | Ratio (phr) |
|---|---|---|
| Elastomeric polymer | EPDM | 100 |
| Nanofiller | Organoclay (OC) | 5 |
| Amphiphilic dispersing agent | Zinc stearate (ZS) Castor oil (CSO) | 10 |
| Chemical blowing agent | azidodicarbonamide (ADC) | 3 |
| Activator for blowing agent | Stearic acid (SAcid) | 3 |
| Crosslinking agent | bis (t-butylperoxyisopropyl)benzene | 2 |
| * In table 1, phr refers to parts by weight with respect to one hundred parts by weight of elastomeric polymer. | | |

Firstly, EPDM (KEP 510 from Kumho Polychem Co. Inc.), organoclay (Dellite 67G, from Laviosa Chemica Mineraria S.p.A.), amphiphilic dispersing agents (zinc stearate: Zn-ST from HAN-IL chemical), castor oil: CSO from Dongyang Uji), chemical blowing agent (ADC: Unicell D200 from Dongjin Semichem Co. Ltd.), activator for blowing agent (SAcid: from LG H&H) was mixed with the ratio in Table 1, using a two roll mill at 60°C for 20 minutes. And a crosslinking agent (PBP-98: Perbutyl P from NOF Corporation) was added to the mixture and further mixed for 20 minutes. The mixture thus obtained was compressed under 120 MPa, and crosslinked for a period of time $t_{c90}$ defined below. Subsequently, the pressure was released and the obtained composite was cooled in the air. As a result, the microcellular foamed rubber nanocomposite was made.

### Evaluation method for melt processability of nanocomposite

In order to measure the crosslinking temperature and time optimized for preparing a crosslinked product of nanocomposite, a test using moving die rheometer was carried out to determine minimum torque value ($S_{min}$) and maximum torque value ($S_{max}$) at a given temperature, and the time $t_{c90}$ taken to reach to 90% of the maximum torque value.

### Evaluation method for mechanical properties of microcellular foamed nanocomposite

The mechanical properties such as tensile strength (TS) or Elongation at Break (EB) of the nanocomposite were determined by preparing dumbbell-shaped species as defined in the DIN 53504.S2 standard and then using a universal tensile strength tester under the condition as defined in the IEC 60811-1-1 standard. When both values of the tensile strength and the elongation at break are higher, the mechanical properties are considered to be better on the whole.

Evaluation method for specific gravity, cell average diameter and cell density of the microcellular foamed nanocomposite

The specific gravity of the microcellular foamed nanocomposite was determined by the test under the condition as defined ASTM D792 standard. Also, average cell size (ACS) and cell density (CD) were determined through image analysis using field-emission scanning electron microscope (FE-SEM, commercialized by FEI Co., with a reference Magellan 400).

Particularly, the specimen was immersed in liquid nitrogen, cooled for a few minutes, and broken so that the cut specimen was obtained. And then the cut surface of the specimen was coated with osmium, and FE-SEM was performed. The average cell size and cell density was determined from the FE-SEM images of the specimen. The cell density was calculated using following formula 1, wherein the cell number ($n_b$) in the defined area (A) was obtained from FE-SEM images of the specimen, and the density of specimen (p) was calculated from above mentioned specific gravity.

$$[\text{Formula } 1]$$

$$CD = \left(\frac{n_b}{A}\right)^{3/2} \left(\frac{\rho_s}{\rho_f}\right)$$

(ps refers to a density of specimen before foamed, and pf refers to a density of the specimen after foamed)

Various properties determined using different microcellular foamed nanocomposite

Microcellular foamed nanocomposites were prepared using the components and the mixing ratio as given in Table 2 according to the above-described representative preparation method. The meaning of the abbreviations described in Table 2 is as defined above in the present specification.

The nanocomposites thus obtained were determined on the mechanical properties, cell density, average cell diameter, and specific gravity etc. according to the above-described measurement methods.

The results are presented in Table 2 below.

The examples marked by "**" denote the comparative examples not belonging to the scope of the present invention, on the contrary, the examples without a mark "**" denote the examples of microcellular foaming nanocomposite of the present invention.

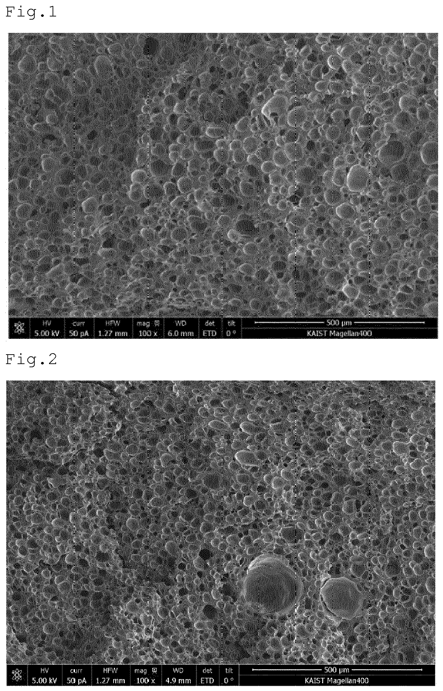

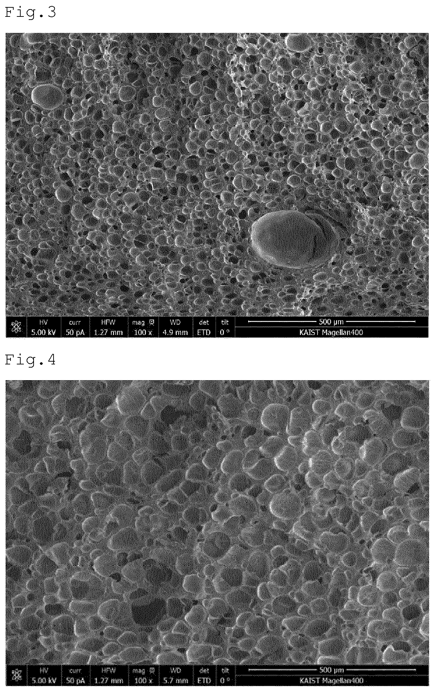

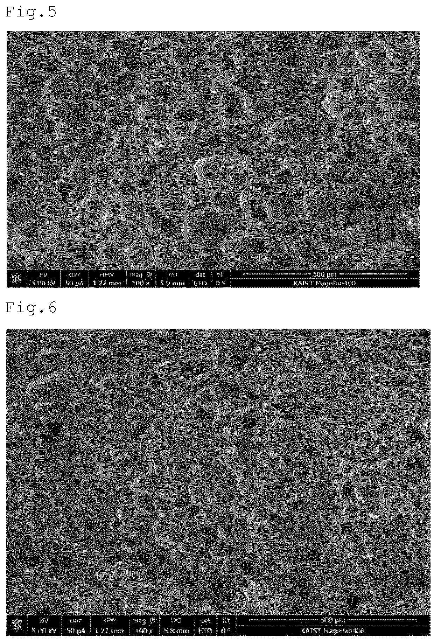

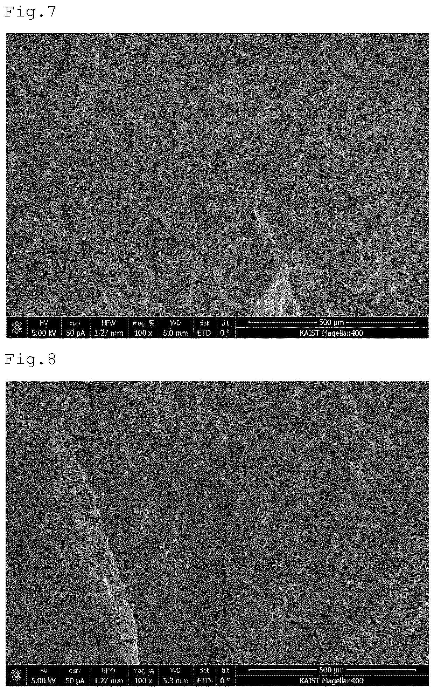

Furthermore, the FE-SEM images of microcellular foaming nanocomposite according to the example 5 to 10 were shown in Figures 1 to 6, and the FE-SEM images of composite according to comparative examples of 2 to 4 were shown in Figures 7 to 9.

**[Table 2]**

| Example | components | ratio (phr) | TS (MPa) | EB (%) | CD (cells/cm³) | ACS (μm) | SG |
|---------|-----------|-------------|----------|--------|----------------|----------|------|
| 1** | EPDM | 100 | 1.6 | 130 | - | - | 0.88 |
|  | PBP-98 | 2 |  |  |  |  |  |
| 2** | EPDM | 100 | 2.9 | 460 | - | - | 0.87 |
|  | PBP-98 | 2 |  |  |  |  |  |
|  | ADC | 3 |  |  |  |  |  |
|  | SAcid | 3 |  |  |  |  |  |
| 3** | EPDM | 100 | 1.8 | 290 | - | - | 0.82 |
|  | PBP-98 | 2 |  |  |  |  |  |
|  | ADC | 3 |  |  |  |  |  |
|  | SAcid | 3 |  |  |  |  |  |
|  | OC | 5 |  |  |  |  |  |

(continued)

| Example | components | ratio (phr) | TS (MPa) | EB (%) | CD (cells/cm$^3$) | ACS (μm) | SG |
|---|---|---|---|---|---|---|---|
| 4** | EPDM<br>PBP-98<br>TSH<br>Urea<br>OC | 100<br>2<br>3<br>3<br>5 | 1.7 | 550 | $5.1 \times 10^4$ | 380 | 0.44 |
| 5 | EPDM<br>PBP-98<br>ADC<br>SAcid<br>OC<br>ZS<br>OLO | 100<br>2<br>3<br>3<br>5<br>10<br>10 | 3.0 | 560 | $1.3 \times 10^8$ | 30 | 0.43 |
| 6 | EPDM<br>PBP-98<br>ADC<br>SAcid<br>OC<br>ZS<br>OLO | 100<br>2<br>3<br>3<br>1<br>10<br>10 | 2.7 | 530 | $1.8 \times 10^8$ | 25 | 0.48 |
| 7 | EPDM<br>PBP-98<br>ADC<br>SAcid<br>OC<br>ZS<br>OLO | 100<br>2<br>5<br>5<br>5<br>10<br>10 | 2.1 | 480 | $3.0 \times 10^8$ | 25 | 0.31 |
| 8 | EPDM<br>PBP-98<br>ADC<br>ZnO<br>OC<br>ZS<br>OLO | 100<br>2<br>3<br>3<br>5<br>10<br>10 | 3.0 | 540 | $3.8 \times 10^7$ | 70 | 0.38 |
| 9 | EPDM<br>PBP-98<br>TSSC<br>Urea<br>OC<br>ZS<br>OLO | 100<br>2<br>3<br>3<br>5<br>10<br>10 | 1.8 | 520 | $1.1 \times 10^7$ | 120 | 0.40 |
| 10 | EPDM<br>PBP-98<br>OBSH<br>Urea<br>OC<br>ZS<br>OLO | 100<br>2<br>3<br>1.3<br>5<br>10<br>10 | 5.0 | 670 | $2.1 \times 10^7$ | 60 | 0.54 |

In table 2, phr refers to parts by weight with respect to one hundred parts by weight of elastomeric polymer.

As shown in Table 2 and Fig. 1 to 6, in the examples 5 to 10, the microcellular forming nanocomposite having a cell average size of 120$\mu$m or less and a cell density of $10^7$ cells/cm$^3$ or less was obtained. Also, the nanocomposites according to the examples 5 to 10 was shown to have enhanced mechanical properties than that of examples 1 to 4 (comparative examples).

Particularly, the average cell density of nanocomposite according to examples 6 to 7 was 25$\mu$m, the specific gravity of the nanocomposite according to example 7 was 3.0x10$^8$ cells/cm$^3$.

It means that in accordance with the present invention, the average cell size(diameter) of the nanocomposite can be decreased up to 25$\mu$m, and the cell density of the nanocomposite can be increased up to 3.0X10$^8$ cells/cm$^3$, the specific gravity of the nanocomposite can be decreased up to 0.31 by adjusting the kinds and ratio of nanofiller, amphiphilic dispersing agent, chemical blowing agent and activator of the present invention.

On the other hand, with respect to the composite comprising elastomeric polymer and crosslinking agent (comparative example 1), the composite which does not comprise amphiphilic dispersing agent and nanofiller (comparative example 2), or the composite which does not comprise amphiphilic dispersing agent, the cell was rarely foamed, and thus the specific gravity of the samples were not decreased (see, Table 2 and Figures 7 to 8)

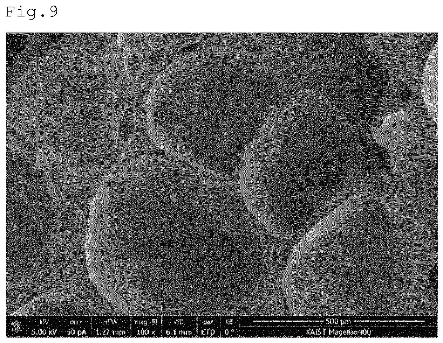

In addition, with respect to the nanocomposite according to the comparative example 4 which does not comprise amphiphilic dispersing agent and comprises chemical blowing agent of TSH having low decomposition temperature, a giant open cell was formed (see, table 2 and Figure 9). And as shown in Table 2, the composite having giant open cells according to the comparative example 4 has a tensile strength lower than that of the microcellular foamed nanocomposite according to the present invention. Also, the composite having giant open cells presents non-uniform mechanical properties, lower electrical properties, lower barrier properties against moisture and oil, lower fire retardant properties compared with microcellular foamed nanocomposite (data not shown). Furthermore, the composite having giant open cells has a problem that cannot be molded to the product having smooth surface, since the surface expands abruptly when the composite is foamed.

Therefore, the present invention can provide microcellular foamed rubber nanocomposite which has enhanced mechanical properties and can be mass producible under the condition of common cross-linkable temperature by adding nanofiller, at least two kinds of amphiphilic dispersing agents, chemical blowing agent and activator simultaneously.

## Claims

1. A microcellular foaming nanocomposite comprising: an elastomeric polymer; a nanofiller; at least two of amphiphilic dispersing agents; a chemical blowing agent; an activator for chemical blowing agent; and a crosslinking agent.

2. The nanocomposite according to claim 1, wherein the elastomeric polymer is ethylene-propylene-dien copolymer (EPDM).

3. The nanocomposite according to claim 1 or 2, wherein the nanofiller is selected from the group consisting of carbon black, nanoclay, nanosilica, polyhedral oligomer silsesquioxane(POSS), layered double hydroxide, nano-CaCO$_3$, carbon nanotube, griffin, colloid nanoparticle, and a mixture thereof.

4. The nanocomposite according to any one of the preceding claims, wherein the at least two of amphiphilic dispersing agents are selected from the group consisting of an amphiphilic carboxylic acid based compound, an amphiphilic amine based compound, and an amphiphilic fatty acid ester compound, separately.

5. The nanocomposite according to any one of the preceding claims, wherein the chemical blowing agent is selected from the group consisting of p,p'-oxybis(benzenesulfonylhydrazide),(p-toluenesulfonylhydrizide(TSH),(p-toluenesulfonylsemicarbazide (TSSC), azidodicarbonamide (ADC), and the mixture thereof.

6. The nanocomposite according to any one of the preceding claims, wherein the activator is selected from the group consisting of metallic activator, acidic activator, basic activator, urea-based activator, and a mixture thereof.

7. The nanocomposite according to any one of the preceding claims, wherein the nanocomposite comprises elastomeric polymer in an amount of 100 parts by weight, nanofiller in an amount of 0.1 to 20 parts by weight, amphiphilic dispersing agents in an amount of 1 to 40 parts by weight, chemical blowing agent in an amount of 1 to 20 parts by weight, activator in an amount of 0.1 to 10 parts by weight, and crosslinking agent in amount of 0.1 to 10 parts by weight, the amounts being expressed with respect to 100 parts by weight of elastomeric polymer.

8. Microcellular foamed nanocomposite obtained from the microcellular foaming nanocomposite according to any one of the preceding claims.

9. The microcellular foamed nanocomposite according to claim 8, wherein it has an average cell size of 120 $\mu$m or below, or a cell density of $10^7$ cells/cm$^3$ or more.

10. A method for preparing a microcellular foamed nanocomposite according to claim 8 or 9, comprising the steps of:

   a) mixing elastomeric polymer, nanofiller, at least two of amphiphilic dispersing agents, chemical blowing agent, activator for chemical blowing agent and crosslinking agent;
   b) crosslinking the mixture obtained from the step a) under the condition of high pressure; and
   c) releasing the pressure and foaming.

11. A cable comprising at least one elongated conductive element surrounded by at least one microcellular foamed nanocomposite according to claim 8 or obtained from the method according to claim 10.

Fig.1

Fig.2

Fig.3

Fig.4

Fig.5

Fig.6

Fig.7

| HV | curr | HFW | mag ⊞ | WD | det | tilt | 500 μm |
| 5.00 kV | 50 pA | 1.27 mm | 100 x | 5.0 mm | ETD | 0 ° | KAIST Magellan400 |

Fig.8

| HV | curr | HFW | mag ⊞ | WD | det | tilt | 500 μm |
| 5.00 kV | 50 pA | 1.27 mm | 100 x | 5.3 mm | ETD | 0 ° | KAIST Magellan400 |

Fig.9

Europäisches
Patentamt

European
Patent Office

Office européen
des brevets

# EUROPEAN SEARCH REPORT

Application Number

EP 16 30 6840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/021651 A1 (MAYERES JEAN-PIERRE [BE] ET AL) 27 January 2011 (2011-01-27) | 1-10 | INV.<br>C08J9/00 |
| A | * paragraph [0022] - paragraph [0043] *<br>* example 2.2 * | 11 | C08J9/10<br><br>ADD. |
| X | DATABASE WPI<br>Week 201156<br>Thomson Scientific, London, GB;<br>AN 2011-J07028<br>XP002767793,<br>-& CN 102 093 718 A (UNIV SICHUAN)<br>15 June 2011 (2011-06-15) | 1,3-10 | C08L23/16<br>C08K3/04<br>C08K3/34<br>C08K5/09<br>C08K5/10<br>C08K5/17<br>C08K5/20 |
| A | * abstract *<br>* examples 1, 2 * | 2,11 | |
| X | DATABASE WPI<br>Week 201240<br>Thomson Scientific, London, GB;<br>AN 2012-D89185<br>XP002767794,<br>-& CN 102 382 406 A (UNIV ZHENGZHOU)<br>21 March 2012 (2012-03-21) | 1-10 | |
| A | * abstract *<br>* examples 4, 6 * | 11 | TECHNICAL FIELDS SEARCHED (IPC)<br><br>C08J<br>C08L<br>H01B |
| X | DATABASE WPI<br>Week 201533<br>Thomson Scientific, London, GB;<br>AN 2015-224971<br>XP002767795,<br>-& CN 104 356 496 A (MAOTAI FUJIAN SHOES MATERIAL CO LTD)<br>18 February 2015 (2015-02-18) | 1-9 | |
| A | * abstract *<br>* example 1 * | 10,11 | |

-/--

The present search report has been drawn up for all claims

| Place of search | Date of completion of the search | Examiner |
|---|---|---|
| The Hague | 3 March 2017 | Lichau, Holger |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................
& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 16 30 6840

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201632<br>Thomson Scientific, London, GB;<br>AN 2015-74102X<br>XP002767796,<br>-& CN 105 037 908 A (UNIV EAST CHINA SCI & TECHNOLOGY) 11 November 2015 (2015-11-11) | 1-10 | |
| A | * abstract *<br>* examples 1, 4, 5 * | 11 | |

-----

TECHNICAL FIELDS
SEARCHED (IPC)

The present search report has been drawn up for all claims

| Place of search | Date of completion of the search | Examiner |
|---|---|---|
| The Hague | 3 March 2017 | Lichau, Holger |

EPO FORM 1503 03.82 (P04C01)

## ANNEX TO THE EUROPEAN SEARCH REPORT
## ON EUROPEAN PATENT APPLICATION NO.

EP 16 30 6840

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2017

| Patent document cited in search report | Publication date | Patent family member(s) | Publication date |
|---|---|---|---|
| US 2011021651 A1 | 27-01-2011 | AT 530597 T<br>BR PI0907117 A2<br>CA 2713052 A1<br>CN 101959944 A<br>DK 2235096 T3<br>EP 2235096 A1<br>ES 2375338 T3<br>US 2011021651 A1<br>WO 2009092785 A1 | 15-11-2011<br>07-07-2015<br>30-07-2009<br>26-01-2011<br>23-01-2012<br>06-10-2010<br>29-02-2012<br>27-01-2011<br>30-07-2009 |
| CN 102093718 A | 15-06-2011 | NONE | |
| CN 102382406 A | 21-03-2012 | NONE | |
| CN 104356496 A | 18-02-2015 | NONE | |
| CN 105037908 A | 11-11-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7026365 B

**Non-patent literature cited in the description**

• **PEREZ et al.** Using chemical blowing agents to make microcellular nanocomposites. Society of Plastics Engineers, 2009